(19) Europäisches Patentamt / European Patent Office / Office européen des brevets

(11) EP 4 246 628 A1

(12) **EUROPEAN PATENT APPLICATION**
published in accordance with Art. 153(4) EPC

(43) Date of publication:
**20.09.2023 Bulletin 2023/38**

(21) Application number: **22750020.4**

(22) Date of filing: **03.02.2022**

(51) International Patent Classification (IPC):
**H01M 4/525** (2010.01)    **H01M 4/505** (2010.01)
**C01G 53/00** (2006.01)    **H01M 10/052** (2010.01)

(52) Cooperative Patent Classification (CPC):
**C01G 53/00; H01M 4/505; H01M 4/525;**
**H01M 10/052**

(86) International application number:
**PCT/KR2022/001711**

(87) International publication number:
**WO 2022/169271 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.02.2021 KR 20210017103**

(71) Applicant: **Lg Chem, Ltd.**
**Seoul 07336 (KR)**

(72) Inventors:
• **JUNG, Ji Hun**
 **Daejeon 34122 (KR)**
• **PARK, Hyun Ah**
 **Daejeon 34122 (KR)**
• **LEE, Eung Ju**
 **Daejeon 34122 (KR)**
• **SON, Min Hee**
 **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL AND METHOD FOR PREPARING SAME**

(57) The present invention relates to: a positive electrode active material comprising a lithium transition metal oxide which includes 60 mol% or more of nickel with respect to the total number of moles of transition metals excluding lithium, and is in the form of a secondary particle in which primary particles are agglomerated, wherein the lithium transition metal oxide satisfies expression 1 in the specification; a method for preparing the positive electrode active material; a positive electrode comprising the positive electrode active material; and a lithium secondary battery.

[FIG. 1]

**Description**

**TECHNICAL FIELD**

**Cross-reference to Related Applications**

This application claims priority from Korean Patent Application No. 10-2021-0017103, filed on February 5, 2021, the disclosure of which is incorporated by reference herein.

**Technical Field**

The present invention relates to a positive electrode active material and a method of preparing the same, and more particularly, to a positive electrode active material, in which pores included in a secondary particle satisfy a specific condition because the positive electrode active material is prepared from a positive electrode active material precursor with a controlled aspect ratio of crystallines, a method of preparing the same, and a positive electrode and a lithium secondary battery which include the positive electrode active material.

**BACKGROUND ART**

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal oxides have been used as a positive electrode active material of the lithium secondary battery, and, among these oxides, a lithium cobalt oxide, such as $LiCoO_2$, having a high operating voltage and excellent capacity characteristics has been mainly used. However, since the $LiCoO_2$ has very poor thermal properties due to an unstable crystal structure caused by delithiation and is expensive, there is a limitation in using a large amount of the $LiCoO_2$ as a power source for applications such as electric vehicles.

Lithium manganese composite metal oxides ($LiMnO_2$, $LiMn_2O_4$, etc.), lithium iron phosphate compounds ($LiFePO_4$, etc.), or lithium nickel composite metal oxides ($LiNiO_2$, etc.) have been developed as materials for replacing the $LiCoO_2$. Among these materials, research and development of the lithium nickel composite metal oxides, in which a large capacity battery may be easily achieved due to a high reversible capacity of about 200 mAh/g, have been more actively conducted. However, the $LiNiO_2$ has limitations in that the $LiNiO_2$ has poorer thermal stability than the $LiCoO_2$ and, when an internal short circuit occurs in a charged state due to an external pressure, the positive electrode active material itself is decomposed to cause rupture and ignition of the battery. Accordingly, as a method to improve low thermal stability while maintaining the excellent reversible capacity of the $LiNiO_2$, $LiNi_{1-\alpha}Co_\alpha(O_2(\alpha=0.1$ to $0.3)$, in which a portion of nickel is substituted with cobalt, or a lithium nickel cobalt metal oxide, in which a portion of nickel is substituted with manganese (Mn), cobalt (Co), or aluminum (Al), has been developed. Recently, lithium composite transition metal oxides including two or more types of transition metals, for example, $Li[Ni_aCo_bMn_c]O_2$, $Li[Ni_aCo_bAl_c]O_2$, and $Li[Ni_aCo_bMn_cAl_d]O_2$, have been developed and widely used.

The lithium transition metal oxides including two or more types of transition metals are typically prepared in the form of a spherical secondary particle in which tens to hundreds of primary particles are aggregated, and the secondary particle includes pores, wherein physical properties of the positive electrode active material, such as reactivity and particle strength, vary due to a change in contact area with an electrolyte depending on pore size and distribution of the secondary particle. Accordingly, studies are being attempted to improve performance of the positive electrode active material by analyzing the pores included in the secondary particle through Brunauer-Emmett-Teller (BET) analysis or mercury intrusion porosimetry and using the analysis.

However, with respect to the pore analysis through the BET analysis or mercury intrusion porosimetry, sizes of the pores included in the secondary particle may be measured, but, since it is not known how the pores are located in the secondary particle, there is a problem in that it is difficult to control the performance of the positive electrode active material.

Thus, in order to develop a positive electrode active material having better characteristics, there is a need to develop a positive electrode active material in which positions as well as sizes of the pores included in the secondary particle are controlled.

## DISCLOSURE OF THE INVENTION

### TECHNICAL PROBLEM

An aspect of the present invention provides a positive electrode active material in which pores included in a secondary particle satisfy a specific condition to be able to improve stability of a battery.

Another aspect of the present invention provides a method of preparing the positive electrode active material by using a positive electrode active material precursor in which an aspect ratio of crystallines satisfies a specific condition.

### TECHNICAL SOLUTION

According to an aspect of the present invention, there is provided a positive electrode active material including a lithium transition metal oxide which contains 60 mol% or more of nickel based on a total number of moles of transition metals excluding lithium and is in a form of a secondary particle in which primary particles are aggregated, wherein the lithium transition metal oxide satisfies Equation 1.

$$[\text{Equation 1}]$$

$$1 \leq \frac{x}{y} \leq 20$$

In Equation 1,

x and y are obtained from cross-sectional scanning electron microscope (SEM) image analysis of the secondary particle, wherein x is a minimum area (unit: $\mu m^2$) of a rectangle including all pores having an area greater than 0.002 $\mu m^2$ among closed pores distributed in the secondary particle, and y is a total sum of areas (unit: $\mu m^2$) of the pores having an area greater than 0.002 $\mu m^2$ among the closed pores distributed in the secondary particle.

According to another aspect of the present invention, there is provided a method of preparing the positive electrode active material which includes steps of: (A) preparing a positive electrode active material precursor which includes a transition metal hydroxide containing 60 mol% or more of nickel based on a total number of moles of transition metals and being in a form of a secondary particle in which primary particles are aggregated, and has a crystalline aspect ratio of 1.0 or more to less than 4.0; and

(B) preparing a lithium transition metal oxide by mixing the positive electrode active material precursor with a lithium-containing raw material and sintering the mixture.

According to another aspect of the present invention, there is provided a positive electrode for a lithium secondary battery, which includes the positive electrode active material, and a lithium secondary battery including the positive electrode.

### ADVANTAGEOUS EFFECTS

In the present invention, since pores included in a secondary particle satisfy a specific condition, stability of a positive electrode active material is excellent. Thus, when the positive electrode active material is used in a lithium secondary battery, an amount of gas generated from the battery may be reduced.

In the present invention, a positive electrode active material, in which the pores included in the secondary particle satisfy a specific condition, may be prepared by using a positive electrode active material precursor in which an aspect ratio of crystallines satisfies a specific condition.

### BRIEF DESCRIPTION OF THE DRAWINGS

FIG. 1 illustrates a cross-sectional scanning electron microscope (SEM) image and sizes and location distribution of pores of one secondary particle in a positive electrode active material prepared in Example 1 of the present invention;

FIG. 2 illustrates a cross-sectional SEM image and sizes and location distribution of pores of one secondary particle in a positive electrode active material prepared in Example 2 of the present invention;

FIG. 3 illustrates a cross-sectional SEM image and sizes and location distribution of pores of one secondary particle in a positive electrode active material prepared in Example 3 of the present invention;

FIG. 4 illustrates a cross-sectional SEM image and sizes and location distribution of pores of one secondary particle in a positive electrode active material prepared in Comparative Example 1 of the present invention; and
FIG. 5 illustrates a cross-sectional SEM image and sizes and location distribution of pores of one secondary particle in a positive electrode active material prepared in Comparative Example 2 of the present invention.

## MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present invention, the expression "crystalline" means a single crystal unit having a regular atomic arrangement.

A size of the crystalline is a value measured by analyzing X-ray diffraction (XRD) data obtained by X-ray diffraction analysis of positive electrode active material precursor powder using a Rietveld refinement method, and an aspect ratio of the crystalline is a ratio (a/c) of a major axis length (a) to a minor axis length (c) of the crystalline which is calculated by applying full widths at half-maximum (FWHM) of all peaks present in the XRD data to the Scherrer equation modified by applying ellipsoid modeling.

The size and aspect ratio of the crystalline may be specifically obtained by the following method.

First, X-ray diffraction analysis is performed on a positive electrode active material precursor to obtain XRD data. In this case, the X-ray diffraction analysis may be performed under the following conditions using an Empyrean XRD instrument by Malvern Panalytical.

<X-ray diffraction analysis conditions>

X-ray source: Cu-target, 45 kV, 40 mA output
Detector: GaliPIX3D
Sample preparation: about 5 g of a sample was filled in a holder with a diameter of 2 cm and loaded on a rotation stage
Measurement time: about 30 minutes
Measurement range: 2θ=15° ~ 85°

The crystalline size may be obtained by using Highscore, an XRD data refinement program of Malvern Panalytical, and specifically, may be obtained by fitting the full widths at half-maximum of all peaks present in the XRD data with the Caglioti equation.

The aspect ratio of the crystalline may be obtained from the major axis length a and the minor axis length c which are obtained by a least-squares approximation method, after applying the full widths at half-maximum of all peaks present in the XRD data obtained by the X-ray diffraction analysis of the positive electrode active material precursor to the following Equation 2.

[Equation 2]

$$d_{(hkl)} = \frac{k\lambda}{2\cos\theta \sqrt{\left\{a\cos\left(\tan^{-1}\left(\frac{a}{c}\tan\left(\frac{\sqrt{l^2}}{\sqrt{h^2+k^2}}\right)\right)\right)\right\}^2 + \left\{c\sin\left(\tan^{-1}\left(\frac{a}{c}\tan\left(\frac{\sqrt{l^2}}{\sqrt{h^2+k^2}}\right)\right)\right)\right\}^2}}$$

In Equation 2, d(hkl) is the full width at half-maximum at the corresponding peak, h, k, l are Miller indices of a crystal plane of the corresponding peak, k is a Scherrer constant, θ is a Bragg angle, λ is an X-ray wavelength, a is the major axis length of the crystalline, and c is the minor axis length of the crystalline.

In the present invention, the expression "primary particle" denotes a smallest particle unit which is distinguished as one body when a cross section of the positive electrode active material precursor is observed through a scanning electron microscope (SEM), wherein it may be composed of a single crystalline, or may also be composed of a plurality of crystallines.

Hereinafter, the present invention will be described in detail.

The present inventors have found that stability of a positive electrode active material may be improved when pores included in a secondary particle satisfy a specific condition, thereby leading to the completion of the present invention. That is, the present inventors have found that, when a lithium secondary battery including the positive electrode active material, in which the pores included in the secondary particle satisfy a specific condition, is stored for a long period of time at a high temperature (e.g. 60°C) in a charged state, a volume change rate of the battery is small, thereby leading to the completion of the present invention.

## Positive Electrode Active Material

The positive electrode active material according to the present invention includes a lithium transition metal oxide which contains 60 mol% or more of nickel based on a total number of moles of transition metals excluding lithium and is in a form of a secondary particle in which primary particles are aggregated, wherein the lithium transition metal oxide satisfies Equation 1 below.

[Equation 1]

$$1 \leq \frac{x}{y} \leq 20$$

In Equation 1,

x and y are obtained from cross-sectional SEM image analysis of the secondary particle, wherein x is a minimum area (unit: $\mu m^2$) of a rectangle including all pores having an area greater than 0.002 $\mu m^2$ among closed pores distributed in the secondary particle, and y is a total sum of areas (unit: $\mu m^2$) of the pores having an area greater than 0.002 $\mu m^2$ among the closed pores distributed in the secondary particle. In this case, after the positive electrode active material is ion-milled, an SEM image of a cross section of the secondary particle including pores is obtained by an SEM (FEI Company, Quanta FEG 250), and x and y may be obtained by analyzing the SEM image using an Image J commercial program under a 1% to 2% image threshold condition.

In a case in which a condition of Equation 1 is satisfied, stability of the positive electrode active material is excellent. Accordingly, gas generation of the lithium secondary battery including the positive electrode active material according to the present invention may be reduced. The reason for this is that, since the condition of Equation 1 is satisfied, the pores distributed in the secondary particle are concentrated to a center portion in the secondary particle, and as a result, a contact area between the positive electrode active material and an electrolyte is reduced.

In a case in which the positive electrode active material is prepared by using a positive electrode active material precursor in which an aspect ratio of crystallines satisfies a specific condition, the lithium transition metal oxide may satisfy the condition of Equation 1.

The lithium transition metal oxide has the form of a secondary particle which is formed by aggregation of primary particles. In a case in which the lithium transition metal oxide is formed in the form of the secondary particle in which the primary particles are aggregated, since high rolling density may be achieved while having a high specific surface area at the same time, energy density per volume may be increased when the lithium transition metal oxide is used.

According to the present invention, in Equation 1, x may satisfy $1 \leq x \leq 20$, particularly $1 \leq x \leq 15$, and more particularly $1 \leq x \leq 10$. When x is within the above range, there is an advantage in that the contact area with the electrolyte is reduced because the pores in the secondary particle of the positive electrode active material are densely formed.

According to the present invention, in Equation 1, y may satisfy $0.01 \leq y \leq 5.0$, particularly $0.05 \leq y \leq 3.0$, and more particularly $0.1 \leq y \leq 1.5$. When y is within the above range, there is an advantage in that particle strength is secured while having electrochemical activity by including appropriate pores at the same time.

According to the present invention, an average pore area of the pores having an area greater than 0.002 $\mu m^2$ among the closed pores distributed in the secondary particle may be in a range of 0.1 $\mu m^2$/each pore to 5 $\mu m^2$/each pore. The average pore area may specifically be in a range of 0.15 $\mu m^2$/each pore to 3 $\mu m^2$/each pore, for example, 0.2 $\mu m^2$/each pore to 1.5 $\mu m^2$/each pore. In a case in which the average pore area is within the above range, there is an advantage in that the contact area with the electrolyte is reduced because the pores are concentrated to the center portion in the secondary particle. In this case, the average pore area means a value obtained by dividing the total sum of the areas of the pores by the number of pores.

According to the present invention, the lithium transition metal oxide may have a composition represented by Formula 1 below.

[Formula 1]  $Li_aNi_{x1}C_{x1}M1_{z1}M2_{w1}O_2$

In Formula 1, M1 is at least one selected from manganese (Mn) and aluminum (Al), M2 is at least one selected from boron (B), zirconium (Zr), yttrium (Y), molybdenum (Mo), chromium (Cr), vanadium (V), tungsten (W), tantalum (Ta), and niobium (Nb), and $0.9 \leq a \leq 1.2$, $0.6 \leq x1 \leq 1.0$, $0 \leq y1 \leq 0.4$, $0 \leq z1 \leq 0.4$, $0 \leq w1 \leq 0.2$, and $x1+y1+z1+w1=1$.

M1 may be specifically Mn or a combination of Mn and Al.

a represents a ratio of the number of moles of lithium (Li) to the total number of moles of transition metals, wherein a may satisfy $0.9 \leq a \leq 1.2$, particularly $1.0 \leq a \leq 1.2$, and more particularly $1.0 \leq a \leq 1.1$.

x1 represents a ratio of the number of moles of nickel (Ni) to the total number of moles of transition metals, wherein x1 may satisfy $0.6 \leq x1 < 1$, particularly $0.8 \leq x1 < 1$, and more particularly $0.85 \leq x1 < 1$.

y1 represents a ratio of the number of moles of cobalt (Co) to the total number of moles of transition metals, wherein y1 may satisfy $0 \leq y1 \leq 0.4$, particularly $0 < y1 < 0.2$, and more particularly $0 < y1 < 0.15$.

z1 represents a ratio of the number of moles of M1 to the total number of moles of transition metals, wherein z1 may satisfy $0 \leq z1 \leq 0.4$, particularly $0 < z1 < 0.2$, and more particularly $0 < z1 < 0.15$.

w1 represents a ratio of the number of moles of M2 to the total number of moles of transition metals, wherein w1 may satisfy $0 \leq w1 \leq 0.2$, for example, $0 \leq w1 \leq 0.05$.

When the lithium transition metal oxide has the composition represented by Formula 1, it may exhibit high capacity characteristics.

The positive electrode active material according to the present invention may further include a coating layer on a surface of the above-described lithium transition metal oxide. In a case in which the coating layer is further included on the surface of the lithium transition metal oxide, since a contact between the lithium transition metal oxide and an electrolyte solution is blocked by the coating layer, gas generation and transition metal dissolution due to a side reaction with the electrolyte solution may be reduced.

The coating layer may include at least one coating element selected from the group consisting of Li, B, W, Al, Zr, sodium (Na), sulfur (S), phosphorus (P), and Co.

**Method of Preparing Positive Electrode Active Material**

A method of preparing a positive electrode active material according to the present invention includes the steps of: (A) preparing a positive electrode active material precursor which includes a transition metal hydroxide containing 60 mol% or more of nickel based on a total number of moles of transition metals and being in a form of a secondary particle in which primary particles are aggregated, and has a crystalline aspect ratio of 1.0 or more to less than 4.0; and (B) preparing a lithium transition metal oxide by mixing the positive electrode active material precursor with a lithium-containing raw material and sintering the mixture.

In a case in which the positive electrode active material precursor, in which the aspect ratio of crystallines satisfies a specific condition, is used as in the method of preparing a positive electrode active material according to the present invention, a positive electrode active material, in which pores included in the secondary particle satisfy a specific condition, may be prepared. In a case in which the crystalline aspect ratio of the positive electrode active material precursor is in a range of 1.0 or more to less than 4.0, the pores included in the secondary particle of the positive electrode active material to be prepared may satisfy Formula 1. The reason for this is that, when the positive electrode active material precursor having a crystalline aspect ratio within the above range and the lithium-containing raw material are sintered together, crystallization and crystal growth of the primary particles present on a surface portion of the secondary particle of the positive electrode active material precursor occur preferentially over crystallization and crystal growth of the primary particles present in the secondary particle.

In a case in which the crystalline aspect ratio of the positive electrode active material precursor is less than 1.0, there is a problem in that the electrochemical activity is decreased due to excessively few pores in the secondary particle of the positive electrode active material, and, in a case in which the crystalline aspect ratio of the positive electrode active material precursor is greater than 4.0, there is a problem in that the contact area with the electrolyte is increased because the pores in the secondary particle are widely distributed.

The crystalline aspect ratio of the positive electrode active material precursor may be controlled according to an input molar ratio of ammonia/transition metal, a temperature during a co-precipitation reaction, a molar ratio of nickel to the total number of moles of transition metals included in a transition metal-containing solution, and pH conditions during the co-precipitation reaction when the positive electrode active material precursor is prepared.

The transition metal hydroxide has the form of a secondary particle which is formed by aggregation of primary particles. In a case in which the transition metal hydroxide is formed in the form of the secondary particle in which the primary particles are aggregated, high rolling density may be achieved while the transition metal oxide to be prepared has a high specific surface area at the same time.

According to the present invention, the transition metal hydroxide may have a composition represented by Formula 2 below.

$$[Formula\ 2]\qquad Ni_{x2}Co_{y2}M1'_{z2}M2'_{w2}(OH)_2$$

In Formula 2, M1' is at least one selected from Mn and Al, M2' is at least one selected from B, Zr, Y, Mo, Cr, V, W, Ta, and Nb, and $0.6 \leq x2 \leq 1.0$, $0 \leq y2 \leq 0.4$, $0 \leq z2 \leq 0.4$, $0 \leq w2 \leq 0.2$, and $x2+y2+z2+w2=1$.

M1' may be specifically Mn or a combination of Mn and Al.

x2 represents a ratio of the number of moles of Ni to the total number of moles of transition metals, wherein x2 may satisfy $0.6 \leq x2 < 1$, particularly $0.8 \leq x2 < 1$, and more particularly $0.85 \leq x2 < 1$.

y2 represents a ratio of the number of moles of Co to the total number of moles of transition metals, wherein y2 may satisfy $0 \leq y2 \leq 0.4$, particularly $0 < y2 < 0.2$, and more particularly $0 < y2 < 0.15$.

z2 represents a ratio of the number of moles of M1' to the total number of moles of transition metals, wherein z2 may satisfy $0 \leq z2 \leq 0.4$, particularly $0 < z2 < 0.2$, and more particularly $0 < z2 < 0.15$.

w2 represents a ratio of the number of moles of M2' to the total number of moles of transition metals, wherein w2 may satisfy $0 \leq w2 \leq 0.2$, for example, $0 \leq w2 \leq 0.05$.

When the transition metal hydroxide has the composition represented by Formula 2, the positive electrode active material to be prepared may exhibit high capacity characteristics.

The lithium-containing raw material, for example, may be at least one selected from the group consisting of lithium carbonate ($Li_2CO_3$), lithium hydroxide (LiOH), $LiNO_3$, $CH_3COOLi$, and $Li_2(COO)_2$, and may be preferably lithium carbonate ($Li_2CO_3$), lithium hydroxide (LiOH), or a combination thereof.

The positive electrode active material precursor and the lithium-containing raw material may be mixed in a molar ratio of 1:1 to 1:1.2, or 1:1 to 1:1.1 during the preparation of the positive electrode active material. In a case in which the lithium-containing raw material is mixed within the above range, capacity of the positive electrode active material to be prepared may be improved, and an unreacted Li by-product may be minimized.

The sintering may be performed in a temperature range of 700°C to 1,000°C. In a case in which the sintering temperature is within the above range, a reaction between the raw materials may sufficiently occur, and particles may grow uniformly.

The sintering may be performed for 5 hours to 35 hours. In a case in which the sintering time is within the above range, a positive electrode active material with high crystallinity may be obtained, a size of the particle is appropriate, and production efficiency may be improved.

The method of preparing a positive electrode active material according to the present invention may further include a step of washing the lithium transition metal oxide prepared through step (B) with a washing solution and drying the washed lithium transition metal oxide. The washing process is a process for removing a by-product, such as residual lithium, present in the lithium transition metal oxide prepared through step (B), and the drying process is a process for removing moisture from the positive electrode active material containing the moisture through the washing process.

Also, the method of preparing a positive electrode active material according to the present invention may further include a step of forming a coating layer by mixing the dried lithium transition metal oxide with a coating element-containing raw material and performing a heat treatment. Accordingly, a positive electrode active material, in which the coating layer is formed on the surface of the lithium transition metal oxide, may be prepared.

A metallic element included in the coating element-containing raw material may be Zr, B, W, Mo, Cr, Nb, magnesium (Mg), hafnium (Hf), Ta, lanthanum (La), titanium (Ti), strontium (Sr), barium (Ba), cerium (Ce), fluorine (F), P, S, and Y. The coating element-containing raw material may be an acetate, nitrate, sulfate, halide, sulfide, hydroxide, oxide, or oxyhydroxide which contains the metallic element. For example, in a case in which the metallic element is B, boric acid ($H_3BO_3$) may be used.

The coating element-containing raw material may be included in a weight of 200 ppm to 2,000 ppm based on the dried lithium transition metal oxide. In a case in which the amount of the coating element-containing raw material is within the above range, capacity of the battery may be improved, and the coating layer formed may suppress a direct reaction between the electrolyte solution and the lithium transition metal oxide to improve long-term performance characteristics of the battery.

The heat treatment may be performed in a temperature range of 200°C to 400°C. In a case in which the heat treatment temperature is within the above range, the coating layer may be formed while structural stability of the transition metal oxide is maintained. The heat treatment may be performed for 1 hour to 10 hours. In a case in which the heat treatment time is within the above range, an appropriate coating layer may be formed and the production efficiency may be improved.

**Positive Electrode**

Also, the present invention may provide a positive electrode for a lithium secondary battery which includes the positive electrode active material according to the present invention.

Specifically, the positive electrode includes a positive electrode collector and a positive electrode active material layer which is disposed on at least one surface of the positive electrode collector and includes the above-described positive electrode active material.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder in addition to the positive electrode active material.

In this case, the positive electrode active material may be included in an amount of 80 wt% to 99 wt%, for example, 85 wt% to 98 wt% based on a total weight of the positive electrode active material layer. When the positive electrode active material is included in an amount within the above range, excellent capacity characteristics may be obtained.

In this case, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated-EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a positive electrode active material slurry, which is prepared by dissolving or dispersing the positive electrode active material as well as optionally the binder and the conductive agent in a solvent, is coated on the positive electrode collector, and the positive electrode may then be prepared by drying and rolling the coated positive electrode collector. In this case, types and amounts of the positive electrode active material, the binder, and the conductive are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of the slurry and manufacturing yield, and may allow to have a viscosity that may provide excellent thickness uniformity during the subsequent coating for the preparation of the positive electrode.

Also, as another method, the positive electrode may be prepared by casting the slurry for forming a positive electrode active material layer on a separate support and then laminating a film separated from the support on the positive electrode collector.

**Lithium Secondary Battery**

Furthermore, in the present invention, an electrochemical device including the positive electrode according to the present invention may be prepared. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte. Since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder may typically be added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a slurry for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the slurry for forming a negative electrode active material layer on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_6$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. Since the electrolyte may have appropriate conductivity and viscosity when the concentration of the lithium salt is included within the above range, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

**Preparation Example 1**

$NiSO_4$, $CoSO_4$, and $MnSO_4$ were mixed in distilled water in amounts such that a molar ratio of nickel:cobalt:manganese was 88:5:7 to prepare a transition metal aqueous solution with a concentration of 2.4 M.

Subsequently, after deionized water was put into a reactor, dissolved oxygen in the water was removed by purging the reactor with nitrogen gas to create a non-oxidizing atmosphere in the reactor. Thereafter, 7.96 M NaOH was added so that a pH in the reactor was maintained at 11.9.

Thereafter, while the transition metal aqueous solution, a 7.96 M NaOH aqueous solution, and a 5.08 M $NH_4OH$ aqueous solution were added to the reactor at rates of 510 mL/h, 306 mL/h, and 204 mL/h, respectively, a co-precipitation reaction was performed for 40 hours at a reaction temperature of 53°C, a pH of 11.4, and a stirring speed of 300 rpm to prepare positive electrode active material precursor A having an average particle diameter of 10 um and represented by $Ni_{0.88}Co_{0.05}Mn_{0.07}(OH)_2$.

**Preparation Example 2**

$NiSO_4$, $CoSO_4$, and $MnSO_4$ were mixed in distilled water in amounts such that a molar ratio of nickel:cobalt:manganese was 88:5:7 to prepare a transition metal aqueous solution with a concentration of 2.4 M.

Subsequently, after deionized water was put into a reactor, dissolved oxygen in the water was removed by purging the reactor with nitrogen gas to create a non-oxidizing atmosphere in the reactor. Thereafter, 7.96 M NaOH was added so that a pH in the reactor was maintained at 11.9.

Thereafter, while the transition metal aqueous solution, a 7.96 M NaOH aqueous solution, and a 5.08 M $NH_4OH$ aqueous solution were added to the reactor at rates of 510 mL/h, 306 mL/h, and 204 mL/h, respectively, a co-precipitation reaction was performed for 40 hours at a reaction temperature of 60°C, a pH of 11.4, and a stirring speed of 300 rpm to prepare positive electrode active material precursor B having an average particle diameter of 10 um and represented by $Ni_{0.88}Co_{0.05}Mn_{0.07}(OH)_2$.

**Preparation Example 3**

$NiSO_4$, $CoSO_4$, and $MnSO_4$ were mixed in distilled water in amounts such that a molar ratio of nickel:cobalt:manganese was 88:5:7 to prepare a transition metal aqueous solution with a concentration of 2.4 M.

Subsequently, after deionized water was put into a reactor, dissolved oxygen in the water was removed by purging the reactor with nitrogen gas to create a non-oxidizing atmosphere in the reactor. Thereafter, 7.96 M NaOH was added so that a pH in the reactor was maintained at 11.4.

Thereafter, while the transition metal aqueous solution, a 7.96 M NaOH aqueous solution, and a 5.08 M $NH_4OH$ aqueous solution were added to the reactor at rates of 510 mL/h, 306 mL/h, and 306 mL/h, respectively, a co-precipitation reaction was performed for 40 hours at a reaction temperature of 60°C, a pH of 11.4, and a stirring speed of 300 rpm to prepare positive electrode active material precursor C having an average particle diameter of 10 um and represented by $Ni_{0.88}Co_{0.05}Mn_{0.07}(OH)_2$.

**Preparation Example 4**

$NiSO_4$, $CoSO_4$, and $MnSO_4$ were mixed in distilled water in amounts such that a molar ratio of nickel:cobalt:manganese was 88:5:7 to prepare a transition metal aqueous solution with a concentration of 2.4 M.

Subsequently, after deionized water was put into a reactor, dissolved oxygen in the water was removed by purging the reactor with nitrogen gas to create a non-oxidizing atmosphere in the reactor. Thereafter, 7.96 M NaOH was added so that a pH in the reactor was maintained at 11.9.

Thereafter, while the transition metal aqueous solution, a 7.96 M NaOH aqueous solution, and a 5.08 M $NH_4OH$ aqueous solution were added to the reactor at rates of 510 mL/h, 306 mL/h, and 96 mL/h, respectively, a co-precipitation reaction was performed for 40 hours at a reaction temperature of 45°C, a pH of 11.4, and a stirring speed of 300 rpm to prepare positive electrode active material precursor D having an average particle diameter of 10 um and represented by $Ni_{0.88}Co_{0.05}Mn_{0.07}(OH)_2$.

**Preparation Example 5**

$NiSO_4$, $CoSO_4$, and $MnSO_4$ were mixed in distilled water in amounts such that a molar ratio of nickel:cobalt:manganese was 88:5:7 to prepare a transition metal aqueous solution with a concentration of 2.4 M.

Subsequently, after deionized water was put into a reactor, dissolved oxygen in the water was removed by purging the reactor with nitrogen gas to create a non-oxidizing atmosphere in the reactor. Thereafter, 7.96 M NaOH was added so that a pH in the reactor was maintained at 11.4.

Thereafter, while the transition metal aqueous solution, a 7.96 M NaOH aqueous solution, and a 5.08 M $NH_4OH$ aqueous solution were added to the reactor at rates of 510 mL/h, 306 mL/h, and 72 mL/h, respectively, a co-precipitation reaction was performed for 40 hours at a reaction temperature of 45°C, a pH of 11.4, and a stirring speed of 300 rpm to prepare positive electrode active material precursor E having an average particle diameter of 10 um and represented by $Ni_{0.88}Co_{0.05}Mn_{0.07}(OH)_2$.

**Experimental Example 1: Confirmation of Aspect Ratio of Positive Electrode Active Material Precursor Crystalline**

X-ray diffraction analysis (Empyrean, Malvern Panalytical) was performed on the positive electrode active material precursors prepared in Preparation Examples 1 to 5 to derive crystalline aspect ratios, and these are presented in Table 1 below. In this case, X-ray diffraction analysis conditions and a method of deriving the crystalline aspect ratio are the same as described above.

[Table 1]

|  | Aspect ratio of crystalline (a/c) |
|---|---|
| Positive electrode active material precursor A | 3.98 |
| Positive electrode active material precursor B | 3.60 |
| Positive electrode active material precursor C | 3.28 |
| Positive electrode active material precursor D | 5.79 |
| Positive electrode active material precursor E | 6.42 |

**Example 1**

After the positive electrode active material precursor prepared in Preparation Example 1 and LiOH were mixed in a molar ratio of 1:1.05 and Al and Zr were respectively added in amounts of 2 mol% and 0.37 mol% based on the total number of moles of transition metals included in the positive electrode active material precursor, sintering was performed at 780°C for 10 hours to prepare a lithium transition metal oxide (composition: $Li_{1.05}Ni_{0.8563}CO_{0.05}Mn_{0.07}Al_{0.02}Zr_{0.0037}O_2$).

Subsequently, the lithium transition metal oxide was washed by being mixed with water such that a weight ratio of the lithium transition metal oxide to the water was 1:0.8.

After the washing, boric acid was mixed so that B was included in an amount of 1,000 ppm based on 100 parts by weight of the lithium transition metal oxide, and a heat treatment was performed at 300°C for 5 hours to prepare a positive electrode active material in which a B coating layer was formed on a surface of the lithium transition metal oxide.

**Example 2**

A positive electrode active material was prepared in the same manner as in Example 1 except that the positive electrode active material precursor prepared in Preparation Example 2 was used instead of the positive electrode active material precursor prepared in Preparation Example 1.

**Example 3**

A positive electrode active material was prepared in the same manner as in Example 1 except that the positive electrode active material precursor prepared in Preparation Example 3 was used instead of the positive electrode active material precursor prepared in Preparation Example 1.

**Comparative Example 1**

A positive electrode active material was prepared in the same manner as in Example 1 except that the positive electrode active material precursor prepared in Preparation Example 4 was used instead of the positive electrode active material precursor prepared in Preparation Example 1.

**Comparative Example 2**

A positive electrode active material was prepared in the same manner as in Example 1 except that the positive electrode active material precursor prepared in Preparation Example 5 was used instead of the positive electrode active material precursor prepared in Preparation Example 1.

**Experimental Example 2: Analysis of Pores Included in Secondary Particle**

After each of the positive electrode active materials prepared in Examples 1 to 3 and Comparative Examples 1 and 2 was ion-milled, an SEM image of a cross section of a secondary particle including pores was obtained by an SEM (FEI Company, Quanta FEG 250) and was analyzed using an Image J commercial program under a 1% to 2% image threshold condition to obtain a minimum area (x) of a rectangle including all pores having an area greater than 0.002 $\mu m^2$ among closed pores distributed in the secondary particle, a total sum (y) of areas of the pores having an area greater than 0.002 $\mu m^2$ among the closed pores distributed in the secondary particle, and the number of pores, and the results thereof are then presented in Table 2 below. In this case, at least three or more secondary particles per one sample were analyzed and an average value was used.

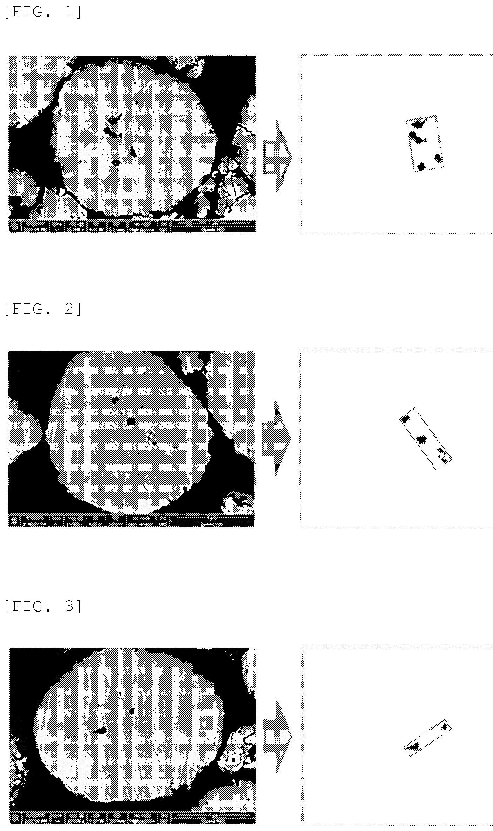

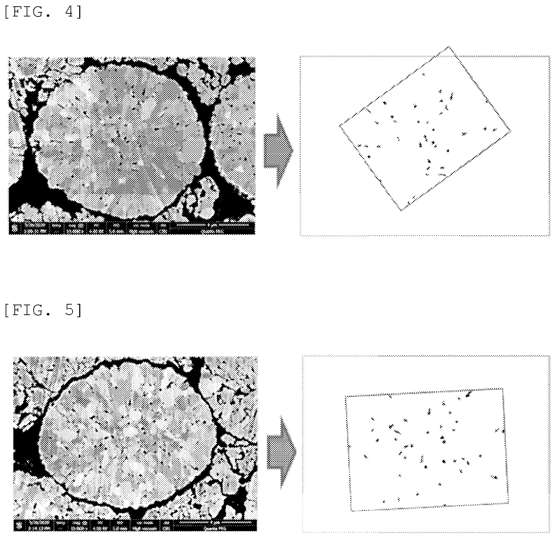

FIGS. 1 through 5 illustrate the cross-sectional SEM image and sizes and location distribution of the pores of one secondary particle in the positive electrode active materials prepared in Examples 1 to 3 and Comparative Examples 1 and 2 of the present invention, respectively.

[Table 2]

|  | x ($\mu m^2$) | y ($\mu m^2$) | x/y | The number of pores (numbers) | Average pore area ($\mu m^2$/each) |
|---|---|---|---|---|---|
| Example 1 | 7.27 | 1.58 | 4.60 | 7.33 | 0.22 |
| Example 2 | 5.56 | 1.10 | 8.02 | 3.33 | 0.33 |
| Example 3 | 2.89 | 0.8 | 3.61 | 4 | 0.20 |
| Comparative Example 1 | 49.07 | 0.53 | 92.58 | 31 | 0.017 |
| Comparative Example 2 | 54.27 | 0.65 | 83.49 | 37 | 0.018 |

**Experimental Example 3: Gas Generation Evaluation**

Lithium secondary batteries were prepared by using the positive electrode active materials prepared in Examples 1 to 3 and Comparative Examples 1 and 2, respectively, and a degree of gas generation was evaluated for each of the lithium secondary batteries.

Specifically, each of the positive electrode active materials of Examples 1 to 3 and Comparative Examples 1 and 2, a carbon black conductive agent, and a polyvinylidene fluoride binder were mixed in a weight ratio of 97.5:1:1.5 in an N-methylpyrrolidone solvent to prepare a slurry for forming a positive electrode active material layer. One surface of a 16.5 um thick aluminum current collector was coated with the slurry for forming a positive electrode active material layer, dried at 130°C, and then roll-pressed to prepare a positive electrode.

A carbon black negative electrode active material and a polyvinylidene fluoride binder were mixed in an N-methylpyrrolidone solvent at a weight ratio of 97.5:2.5 to prepare a slurry for forming a negative electrode active material layer. One surface of a 16.5 um thick copper current collector was coated with the slurry for forming a negative electrode active material layer, dried at 130°C, and then roll-pressed to prepare a negative electrode.

After an electrode assembly was prepared by disposing a porous polyethylene separator between the above-prepared positive electrode and negative electrode, the electrode assembly was put in a battery case, and an electrolyte solution was then injected into the case to prepare each lithium secondary battery. In this case, as the electrolyte solution, an electrolyte solution, in which 1 M $LiPF_6$ was dissolved in an organic solvent in which ethylene carbonate(EC) :dimethyl carbonate(DMC) :ethyl methyl carbonate(EMC) were mixed in a ratio of 3:4:3, was injected to prepare the lithium secondary batteries according to Examples 1 to 3 and Comparative Examples 1 and 2.

After charge formation was performed on each of the lithium secondary batteries of Examples 1 to 3 and Comparative Examples 1 and 2 at a current of 0.1 C for 3 hours, one side of the battery case was opened to perform vacuum degassing and was resealed. Thereafter, charging and discharging were repeated 3 times at a current of 0.33 C and each lithium secondary battery was charged at a current of 0.33 C.

After the battery in a charged state was opened to separate the negative electrode, three positive electrodes and three separators were alternatingly stacked and put in an aluminum pouch, and an electrolyte solution was injected to prepare a battery for measuring a volume. In this case, as the electrolyte solution, an electrolyte solution was used in which 0.7 M $LiPF_6$ was dissolved in an organic solvent in which EC:EMC were mixed in a volume ratio of 3:7.

The battery for measuring a volume, which was prepared as described above, was taken out at weekly intervals while being stored in an oven at 60°C, a volume change rate of the battery was evaluated for 12 weeks using the principle of Archimedes buoyancy, and the volume change rates are presented in Table 3 below.

[Table 3]

|  | Volume change rate of battery (%) |
|---|---|
| Example 1 | 36.5 |
| Example 2 | 38.0 |
| Example 3 | 35.8 |
| Comparative Example 1 | 79.0 |
| Comparative Example 2 | 78.3 |

Referring to Tables 1 to 3, since the positive electrode active material according to the present invention was prepared from the positive electrode active material precursor in which the crystalline aspect ratio satisfied a specific range, the pores included in the secondary particle satisfied a specific condition, and thus, it may be confirmed that stability, particularly, high-temperature stability of the positive electrode active material was excellent.

**Claims**

1. A positive electrode active material comprising a lithium transition metal oxide which contains 60 mol% or more of nickel based on a total number of moles of transition metals excluding lithium and is in a form of a secondary particle in which primary particles are aggregated,

   wherein the lithium transition metal oxide satisfies Equation 1:

   [Equation 1]

   $$1 \leq \frac{x}{y} \leq 20$$

   wherein, in Equation 1,
   x and y are obtained from cross-sectional scanning electron microscope (SEM) image analysis of the secondary particle, wherein x is a minimum area (unit: $\mu m^2$) of a rectangle including all pores having an area greater than 0.002 $\mu m^2$ among closed pores distributed in the secondary particle, and y is a total sum of areas (unit: $\mu m^2$) of the pores having an area greater than 0.002 $\mu m^2$ among the closed pores distributed in the secondary particle.

2. The positive electrode active material of claim 1, wherein, in Equation 1, x satisfies $1 \leq x \leq 20$.

3. The positive electrode active material of claim 1, wherein, in Equation 1, y satisfies $0.01 \leq y \leq 5$.

4. The positive electrode active material of claim 1, wherein an average pore area of the pores having an area greater than 0.002 $\mu m^2$ among the closed pores distributed in the secondary particle is in a range of 0.1 $\mu m^2$/each pore to 5 $\mu m^2$/each pore.

5. The positive electrode active material of claim 1, wherein the lithium transition metal oxide has a composition represented by Formula 1:

   [Formula 1]     $Li_aNi_{x1}CO_{y1}M1_{z1}M2_{w1}O_2$

   wherein, in Formula 1, M1 is at least one selected from manganese (Mn) and aluminum (Al), M2 is at least one selected from boron (B), zirconium (Zr), yttrium (Y), molybdenum (Mo), chromium (Cr), vanadium (V), tungsten (W), tantalum (Ta), and niobium (Nb), and $0.9 \leq a \leq 1.2$, $0.6 \leq x1 \leq 1.0$, $0 \leq y1 \leq 0.4$, $0 \leq z1 \leq 0.4$, $0 \leq w1 \leq 0.2$, and $x1+y1+z1+w1=1$.

6. The positive electrode active material of claim 5, wherein, in Formula 1, $0.85 \leq x1 < 1.0$, $0 < y1 < 0.15$, and $0 < z1 < 0.15$.

7. A method of preparing the positive electrode active material of claim 1, the method comprising steps of:

   (A) preparing a positive electrode active material precursor which includes a transition metal hydroxide containing 60 mol% or more of nickel based on a total number of moles of transition metals and being in a form of a secondary particle in which primary particles are aggregated, and has a crystalline aspect ratio of 1.0 or more to less than 4.0; and
   (B) preparing a lithium transition metal oxide by mixing the positive electrode active material precursor with a lithium-containing raw material and sintering the mixture.

8. The method of claim 7, wherein the transition metal hydroxide has a composition represented by Formula 2:

$$[\text{Formula 2}] \qquad Ni_{x2}Co_{y2}M1'_{z2}M2'_{w2}(OH)_2$$

wherein, in Formula 2, M1' is at least one selected from manganese (Mn) and aluminum (Al), M2' is at least one selected from boron (B), zirconium (Zr), yttrium (Y), molybdenum (Mo), chromium (Cr), vanadium (V), tungsten (W), tantalum (Ta), and niobium (Nb), and $0.6 \leq x2 \leq 1.0$, $0 \leq y2 \leq 0.4$, $0 \leq z2 \leq 0.4$, $0 \leq w2 \leq 0.2$, and $x2+y2+z2+w2=1$.

9. The method of claim 8, wherein, in Formula 2, $0.85 \leq x2 < 1.0$, $0 < y2 < 0.15$, and $0 < z2 < 0.15$.

10. A positive electrode for a lithium secondary battery, the positive electrode comprising the positive electrode active material of claim 1.

11. A lithium secondary battery comprising the positive electrode of claim 10.

[FIG. 1]

[FIG. 2]

[FIG. 3]

EP 4 246 628 A1

[FIG. 4]

[FIG. 5]

17

## INTERNATIONAL SEARCH REPORT

| International application No. |
| --- |
| **PCT/KR2022/001711** |

### A. CLASSIFICATION OF SUBJECT MATTER

**H01M 4/525**(2010.01)i; **H01M 4/505**(2010.01)i; **C01G 53/00**(2006.01)i; **H01M 10/052**(2010.01)i

According to International Patent Classification (IPC) or to both national classification and IPC

### B. FIELDS SEARCHED

Minimum documentation searched (classification system followed by classification symbols)

H01M 4/525(2010.01); C01G 53/00(2006.01); H01M 10/052(2010.01); H01M 10/0525(2010.01); H01M 4/131(2010.01); H01M 4/36(2006.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(positive electrode active material), 전이금속(transition metal), 니켈 (nickel), 1차입자(primary particle), 2차 입자(secondary particle), 공극(pore)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2016-011226 A (SUMITOMO METAL MINING CO., LTD.) 21 January 2016 (2016-01-21) See claims 1-20; and paragraphs [0121]-[0122]. | 1-11 |
| Y | KR 10-2021-0006869 A (LG CHEM, LTD.) 19 January 2021 (2021-01-19) See claims 1-11. | 1-11 |
| A | KR 10-2017-0076723 A (SUMITOMO METAL MINING CO., LTD.) 04 July 2017 (2017-07-04) See entire document. | 1-11 |
| A | KR 10-2019-0008156 A (IUCF-HYU (INDUSTRY-UNIVERSITY COOPERATION FOUNDATION HANYANG UNIVERSITY)) 23 January 2019 (2019-01-23) See entire document. | 1-11 |
| A | KR 10-2018-0063862 A (LG CHEM, LTD.) 12 June 2018 (2018-06-12) See entire document. | 1-11 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 May 2022** | **12 May 2022** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2022/001711**

| Patent document cited in search report | | | Publication date (day/month/year) | Patent family member(s) | | | Publication date (day/month/year) |
|---|---|---|---|---|---|---|---|
| JP | 2016-011226 | A | 21 January 2016 | CN | 106660826 | A | 10 May 2017 |
| | | | | CN | 106660826 | B | 12 April 2019 |
| | | | | JP | 6252383 | B2 | 27 December 2017 |
| | | | | US | 10505191 | B2 | 10 December 2019 |
| | | | | US | 2017-0155144 | A1 | 01 June 2017 |
| | | | | US | 2019-0348675 | A1 | 14 November 2019 |
| | | | | WO | 2015-198710 | A1 | 30 December 2015 |
| KR | 10-2021-0006869 | A | 19 January 2021 | None | | | |
| KR | 10-2017-0076723 | A | 04 July 2017 | CN | 107108264 | A | 29 August 2017 |
| | | | | CN | 107108264 | B | 04 June 2019 |
| | | | | JP | 2017-068263 | A1 | 10 August 2017 |
| | | | | JP | 6658534 | B2 | 04 March 2020 |
| | | | | US | 10593942 | B2 | 17 March 2020 |
| | | | | US | 2017-0324090 | A1 | 09 November 2017 |
| | | | | US | 2020-0161653 | A1 | 21 May 2020 |
| | | | | WO | 2016-068263 | A1 | 06 May 2016 |
| KR | 10-2019-0008156 | A | 23 January 2019 | KR | 10-2194504 | B1 | 23 December 2020 |
| | | | | WO | 2019-013605 | A1 | 17 January 2019 |
| KR | 10-2018-0063862 | A | 12 June 2018 | KR | 10-2081858 | B1 | 26 February 2020 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210017103